# EUROPEAN PATENT APPLICATION

(11) **EP 2 368 424 A1**
(43) Date of publication of application: **28.09.2011**
(21) Application number: 09834704.0
(22) Date of filing: 08.12.2009
(51) Int. Cl.: A01G 31/00, A01G 31/06

(54) **HYDROPONIC METHOD FOR LEAF VEGETABLES AND HYDROPONIC UNIT**

(30) Priority: 24.12.2008 JP 2008328515
(71) Applicant: Happaya Co., Ltd., Chiba 290-0207 (JP)
(72) Inventor: NOMOTO, Kazuhiro, Ichihara-shi Chiba 290-0207 (JP)
(74) Representative: Gille, Christian
(86) International application number: PCT/JP2009/070506
(87) International publication number: WO 2010/073901

(57) **Abstract**

Provided are a hydroponic method for a leaf vegetable, which can be conveniently carried out at home or the like, and a hydroponic unit, which correspond to a hydroponic method for a leaf vegetable, including: supplying nutrient solution to an uppermost stream of a leaf vegetable cultivation container having an inclination in a longitudinal direction; causing the nutrient solution to flow out from a lowermost stream of the cultivation container to circulate the nutrient solution, the cultivation container having: a plurality of planting holes formed in an upper surface thereof; and a concavo-convex groove formed at a bottom surface thereof in parallel to the longitudinal direction; inserting the leaf vegetable through corresponding one of the plurality of planting holes to house the leaf vegetable inside the cultivation container; and carrying out cultivation while bringing a root of the leaf vegetable into contact with the nutrient solution, and a hydroponic unit.

## Description

### Technical Field

The present invention relates to a hydroponic method for a leaf vegetable, which can be conveniently carried out at home or the like, and a hydroponic unit.

### Background Art

Hydroponics refers to nutrient solution cultivation, which does not require a solid medium. Examples of hydroponics include a nutrient film technique (NFT), which allows a shallow stream of nutrient solution to flow down on a mildly-inclined plane, and a deep flow technique (DFT), in which cultivation is carried out in retained nutrient solution. The nutrient film technique refers to a method including placing, on a cultivation table, a panel in which a plurality of holes are opened for holding the plants, holding the plants by inserting the plants through the holes, and supplying the nutrient solution, to thereby carry out cultivation. The present invention relates to this nutrient film technique.
The nutrient film technique requires less water amount per unit area than the deep flow technique, but requires wide cultivation area on a practical scale, which leads to a problem of high cost as the entire device. Further, in the conventional nutrient film technique, there are such problems that unevenness is generated in the nutrient solution flowing down, which disturbs uniform cultivation, and water algae adhere to the panel to easily soil the panel, which shortens the usable life thereof.
In order to solve the above-mentioned defects, there is known a method using a corrugated plate or a gutter as one type of the NFT.

For example, in Patent Literature 1, there is disclosed a hydroponic method including fixedly supporting, by retention rods or the like, a square-rod shaped cultivation mat made of a soft urethane resin foam or the like, placing the cultivation mat on a cultivation bed having a bottom portion formed by a corrugated plate or a V-shaped plate, and circulating culture solution, to thereby cultivate the leaf vegetables.
In Patent Literature 2, there is disclosed a hydroponic device including a flow channel part in which a plurality of rain gutters are arranged in parallel, a water supply part for supplying nutrient solution to the rain gutters, and a plate-like cultivation panel placed on the rain gutters and having holes for planting plants.
However, in the methods of Patent Literatures 1 and 2, the supply amount of the nutrient solution is unstable in the cultivation container, and hence the problem of unevenness of the nutrient solution flowing down is not solved.
Further, in Patent Literature 3, there is disclosed a hydroponic device in which a plurality of holes are provided on an upper panel surface of a hydroponic table, transparent or semi-transparent cylindrical bodies are detachably fitted into the holes, and a hole is formed in a bottom surface of each of the cylindrical bodies so that, when the plant is installed inside the cylindrical body, the root thereof is brought into contact with and soaked in circulating nutrient solution. However, in Patent Literature 3, there are problems in that the structure is complicated and the production cost is high, and hence hydroponics of a leaf vegetable cannot be conveniently carried out at home or the like.

### Citation List

### Patent Literature

[Patent Literature 1] JP 07-99846 A
[Patent Literature 2] JP 2006-197843 A
[Patent Literature 3] JP 2002-272289 A

### Summary of Invention

### Technical Problem

The present invention has been made in view of the above-mentioned circumstances, and has an object to provide a hydroponic method for a leaf vegetable, which can be conveniently carried out at home or the like, and a hydroponic unit.

### Solution to Problem

That is, the present invention provides the following Items (1) and (2).
(1) A hydroponic method for a leaf vegetable, including: supplying nutrient solution to an uppermost stream of a leaf vegetable cultivation container having an inclination in a longitudinal direction; causing the nutrient solution to flow out from a lowermost stream of the leaf vegetable cultivation container to circulate the nutrient solution, the leaf vegetable cultivation container having: a plurality of planting holes formed in an upper surface thereof; and a concavo-convex groove formed at a bottom surface thereof in parallel to the longitudinal direction; inserting the leaf vegetable through corresponding one of the plurality of planting holes to house the leaf vegetable inside the leaf vegetable cultivation container; and carrying out cultivation while bringing a root of the leaf vegetable into contact with the nutrient solution.
(2) A hydroponic unit for a leaf vegetable, including: a leaf vegetable cultivation container having an inclination in a longitudinal direction; a nutrient solution tank; and a nutrient solution circulation supply device for supplying nutrient solution to the leaf vegetable cultivation container, in which: the leaf vegetable cultivation container includes a container main body in a gutter shape and a lid member; the container main body has a concavo-convex groove formed at a bottom surface thereof in parallel to the longitudinal direction; and the lid member has a plurality of planting holes formed in an upper surface thereof, the concavo-convex groove having a depth of 0.01 to 5.0 mm.

### Advantageous Effects of Invention

According to the present invention, a hydroponic method and a hydroponic unit, which enable convenient cultivation of a leaf vegetable, can be provided. Further, the concavo-convex groove is formed at the bottom surface of the leaf vegetable cultivation container main body, and hence nutrient solution flows down evenly, and the supply amount is stable. Therefore, it is possible to carry out stable leaf vegetable cultivation.

### Brief Description of Drawings

[FIG. 1] FIG. 1 is a view illustrating an embodiment of a hydroponic unit according to the present invention, in which
FIG. 1(a) is a schematic plan view thereof and FIG. 1 (b) is a schematic cross-sectional view thereof.
[FIG. 2] FIG. 2 is a schematic cross-sectional view illustrating a junction portion between a supply conduit 42-2 and a supply conduit 42-3.
[FIG. 3] FIG. 3 is a schematic cross-sectional view illustrating the embodiment cut along the line A-A of a leaf vegetable cultivation container 20 of FIG. 1.
[FIG. 4] FIG. 4 is a view illustrating an embodiment of a leaf vegetable cultivation pot 25.
[FIG. 5] FIG. 5 is a plan view of the leaf vegetable cultivation pot 25 of FIG. 4.
[FIG. 6] FIG. 6 is a view illustrating how to fit the leaf vegetable cultivation pot 25 in a raising seedling holder 26.
[FIG. 7] FIG. 7 is a schematic cross-sectional view illustrating a state in which the leaf vegetable cultivation pot 25 is inserted in a concave portion of the raising seedling holder 26.
[FIG. 8] FIG. 8 is a schematic front view illustrating an embodiment of a desktop compact unit for hydroponics according to the present invention.
[FIG. 9] FIG. 9 is a schematic oblique perspective view illustrating the embodiment of the desktop compact unit for hydroponics according to the present invention.
[FIG. 10] FIG. 10 is a schematic cross-sectional view cut along the line A-A of FIG. 9.
[FIG. 11] FIG. 11 is a schematic cross-sectional view cut along the line B-B of FIG. 9.
[FIG. 12] FIG. 12 is a schematic vertical cross-sectional view of a desktop compact unit 50 provided with an illumination device 60 to carry out hydroponics.

### Reference Signs List

- 10:: hydroponic unit
- 20:: leaf vegetable cultivation container
- 21:: container main body
- 22:: lid member
- 23:: planting hole
- 24:: bottom surface
- 25:: leaf vegetable cultivation pot
- 26:: raising seedling holder
- 30:: nutrient solution tank
- 31:: nutrient solution
- 40:: nutrient solution circulation supply device
- 41:: nutrient solution supply pump
- 42-1, 42-2, 42-3:: supply conduit
- 43:: return water collecting channel
- 44:: return conduit
- 50:: desktop compact unit for hydroponics
- 51:: leaf vegetable cultivation container
- 51-1:: container main body
- 51-2:: lid member
- 52:: nutrient solution tank
- 53:: nutrient solution
- 55:: nutrient solution supply pump
- 56-1, 56-2, 56-3:: supply conduit
- 60:: illumination stand

### Description of Embodiments

A hydroponic method for a leaf vegetable according to the present invention includes: supplying nutrient solution to an uppermost stream of a leaf vegetable cultivation container having an inclination in a longitudinal direction; causing the nutrient solution to flow out from a lowermost stream of the cultivation container to circulate the nutrient solution, the cultivation container having: a plurality of planting holes formed in an upper surface thereof; and a concavo-convex groove formed at a bottom surface thereof in parallel to the longitudinal direction; inserting the leaf vegetable through corresponding one of the planting holes to house the leaf vegetable inside the cultivation container; and carrying out cultivation while bringing a root of the leaf vegetable into contact with the nutrient solution.
Further, a hydroponic unit for a leaf vegetable according to the present invention includes: a leaf vegetable cultivation container having an inclination in a longitudinal direction; a nutrient solution tank; and a nutrient solution circulation supply device for supplying nutrient solution to the leaf vegetable cultivation container, in which: the leaf vegetable cultivation container includes a container main body in a gutter shape and a lid member; the container main body has a concavo-convex groove formed at a bottom surface thereof in parallel to the longitudinal direction; and the lid member has a plurality of planting holes formed in an upper surface thereof , the concavo-convex groove having a depth of 0.01 to 5.0 mm.

### (Leaf Vegetable)

The hydroponic method and the hydroponic unit according to the present invention are suitable for hydroponically cultivating Boston lettuce, lettuce, Komatsuna, spinach, Japanese honewort, Welsh onion, herbs such as basil, and the like, and in particular, are suitable for cultivating at least one leaf vegetable selected from a group consisting of Boston lettuce, lettuce, Komatsuna, spinach, Japanese honewort, and herbs.

### (Hydroponic Unit)

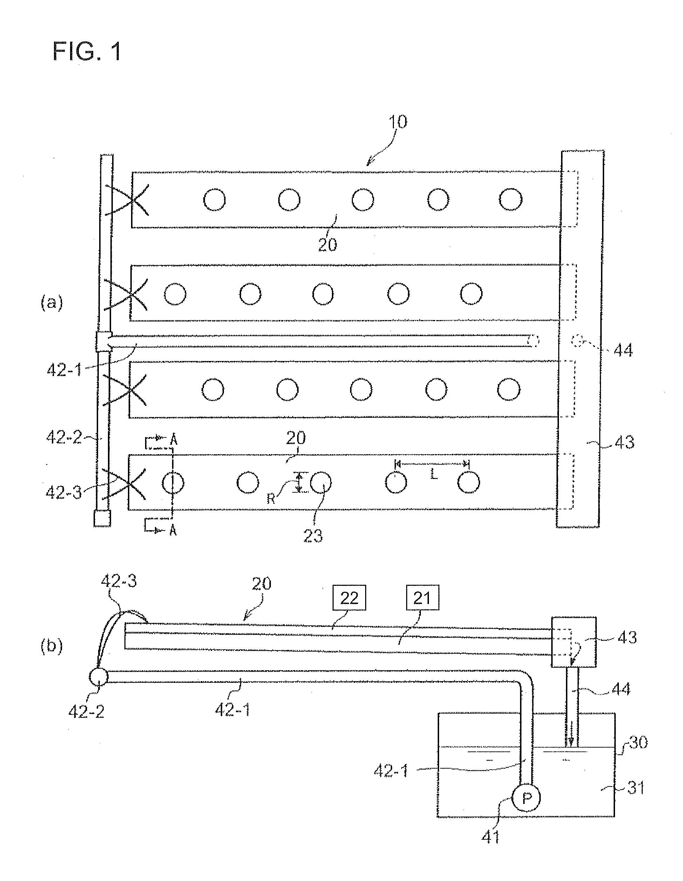

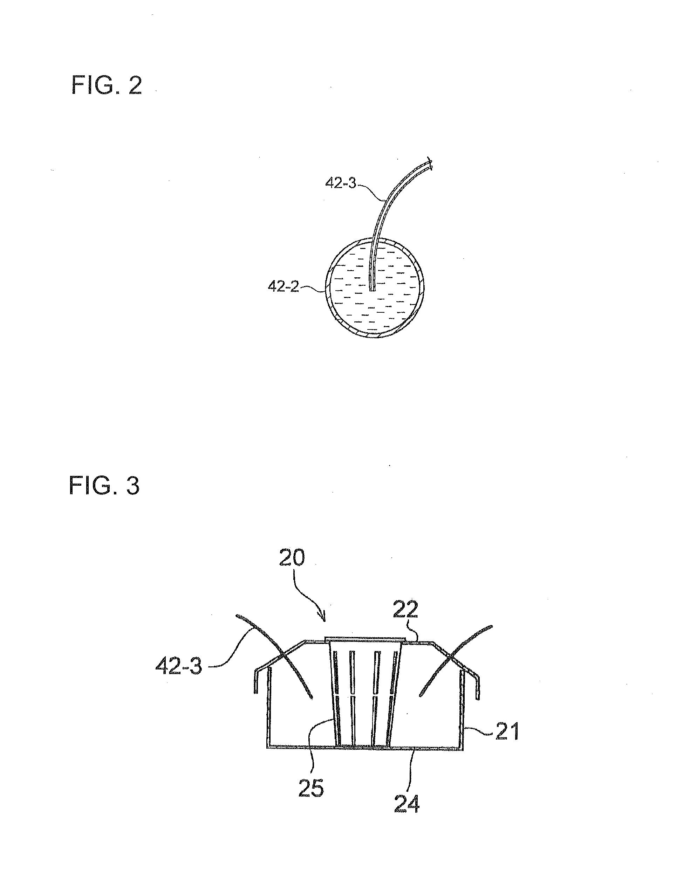

An embodiment of the present invention is described with reference to the drawings. FIG. 1 is a view illustrating the embodiment of the hydroponic unit according to the present invention, in which FIG. 1(a) is a schematic plan view thereof and FIG. 1(b) is a schematic cross-sectional view thereof.
As illustrated in FIG. 1(a) and 1(b), a hydroponic unit 10 for a leaf vegetable includes an assembly of leaf vegetable cultivation containers 20 (assembly of four leaf vegetable cultivation containers 20 in FIG. 1) , a nutrient solution tank 30, and a nutrient solution circulation supply device 40 for circulating and supplying nutrient solution 31 to the leaf vegetable cultivation containers 20. FIG. 2 is a schematic cross-sectional view illustrating a junction portion between a supply conduit 42-2 and a supply conduit 42-3, and FIG. 3 is a schematic cross-sectional view illustrating the embodiment cut along the line A-A of the leaf vegetable cultivation container 20 of FIG. 1.

Each of the leaf vegetable cultivation containers 20 includes a gutter-shaped container main body 21 having an inclination in a longitudinal direction, and a lid member 22. A plurality of planting holes 23 are provided at adequate intervals at the upper surface of the lid member 22.
When the leaf vegetable is cultivated, the root of the leaf vegetable seedling is inserted through the planting hole 23 so as to be housed inside the leaf vegetable cultivation container 20. The nutrient solution 31 is supplied from an uppermost stream (left side in FIG. 1) of the leaf vegetable cultivation container 20, to thereby feed the root of the leaf vegetable with moisture and nutrients. In this manner, the leaf vegetable is grown and cultivated.

The nutrient solution 31 retained in the nutrient solution tank 30 is used by being circulated by the nutrient solution circulation supply device 40. That is, the nutrient solution 31 is supplied to the uppermost stream of the leaf vegetable cultivation container 20 via supply conduits 42-1, 42-2, and 42-3 by using a nutrient solution supply pump 41, and is sprinkled in the container main body 21.
Here, it is preferred that the supply conduit 42-3 be made of a material with flexibility, such as a synthetic-resin tube. It is preferred that the leading end of the supply conduit 42-3 be provided at, as illustrated in FIG. 2, a substantially center part of the supply conduit 42-2, and be provided in a state of being soaked in the supplied nutrient solution 31. With this, in a case where the nutrient solution 31 is supplied from the supply conduit 42-2 via the supply conduit 42-3 to be sprinkled inside the container main body 21, the nutrient solution 31 can be supplied at a uniform flow rate not only near the supply conduit 42-1 but also across the entire region including a vicinity of a terminal apart from the supply conduit 42-1.
The nutrient solution supplied to the leaf vegetable cultivation container 20 is used to feed the root of the leaf vegetable with moisture and nutrients, and then flows out from a lowermost stream (right side of FIG. 1) of the leaf vegetable cultivation container 20. Then, the nutrient solution is collected in a return water collecting channel 43, to thereby return to the nutrient solution tank 30 via a return conduit 44.

The leaf vegetable cultivation container 20 can be disposed by being placed on, for example, a trestle which is formed by crossing pipes or the like. Each of the leaf vegetable cultivation containers 20 is provided with an inclination so that the nutrient solution is caused to flow from the uppermost stream (left side of FIG. 1) to the lowermost stream (right side of FIG. 1) of the leaf vegetable cultivation container 20. Alternatively, instead of forming the leaf vegetable cultivation container 20 with the inclination, an inclination may be provided by changing the height of the leg portion of the trestle, to thereby enable the nutrient solution to naturally flow down.
Next, the leaf vegetable cultivation container 20 and the like are described in detail.

### (Leaf Vegetable Cultivation Container)

The leaf vegetable cultivation container 20 includes the container main body 21, which is entirely made of a metal or synthetic-resin material, and the lid member 22, which is formed detachable with respect to the container main body 21.
The container main body 21 has a gutter shape in which a planar outer shape is formed into a substantially rectangular shape and a vertical cross section is formed into a substantially concave shape. As the cross section shape of the container main body 21, there maybe adopted a rectangular shape, a square shape, a trapezoidal shape, an inverted trapezoidal shape, and other shapes. The dimension of the container main body 21 may be arbitrarily selected depending on the type of the leaf vegetable to be housed and cultivated therein, but is generally formed into a gutter shape having a width of about 8 to 15 cm, a depth of about 5 to 10 cm, and a length of about 1.2 to 2 m.

At the upper surface of the lid member 22, the plurality of planting holes 23 for cultivating leaf vegetables are provided at adequate intervals. A hole diameter R of each of the planting holes 23 and an interval L (see FIG. 1(a)) between centers of adjacent planting holes vary depending on the type of the leaf vegetable to be cultivated. However, generally, it is preferred that the hole diameter R be set to 3 to 5 cm, and the interval L be set to 20 to 30 cm.

A concavo-convex groove is formed at a bottom surface 24 of the container main body 21 along the longitudinal direction of the bottom surface 24 , so as to prevent uneven flow of the nutrient solution and cause uniform flow of the nutrient solution along the bottom surface 24.
A depth of the concavo-convex groove is preferably 0.01 to 5.0 mm, more preferably 0.1 to 2.0 mm, and still more preferably 0.2 to 1.0 mm.
A width of a bottom surface of a concave portion and a width of a top plane of a convex portion are preferably 0.1 to 20 mm, more preferably 0.2 to 10 mm, still more preferably 0.4 to 5 mm, and particularly preferably 0.5 to 3 mm.
Further, an interval between centers of the convex top portions is preferably 0.1 to 20 mm, more preferably 0.2 to 10 mm, still more preferably 0.4 to 5 mm, and particularly preferably 0.5 to 3 mm.

The concavo-convex groove is preferred to be provided along the longitudinal direction with a width at least equivalent to or larger than the hole diameter R of the planting hole 23, and is more preferred to be provided over the entire surface of the bottom surface 24.
Further, the bottom surface 24 may be formed of a metal or synthetic-resin material which is the same as the material of the leaf vegetable cultivation container 20. However, considering maintenance management, cultivation efficiency of the leaf vegetable, and the like, it is preferred to place a sheet thereon, the sheet being obtained by forming the predetermined concavo-convex groove on a black-colored synthetic-resin sheet made of a polyolefin resin or the like.

The bottom surface 24 of the container main body 21 is formed into a substantially planar shape as a whole, but an inclination is provided so as to cause the nutrient solution 31 to flow from the uppermost stream to the lowermost stream of the leaf vegetable cultivation container 20. The inclination of the bottom surface 24 is preferably in a range of, with respect to the longitudinal direction, 0.5/100 to 6/100, more preferably in a range of 1/100 to 5/100, and still more preferably in a range of 2/100 to 4/100 so that the nutrient solution 31 stably flows at an adequate flow velocity on the bottom surface 24 having the concavo-convex groove.

In the bottom surface 24 of the leaf vegetable cultivation container 20, a dent may be provided at a portion corresponding to the planting hole 23, or an inclination may be provided along a width direction so as to be high on the side wall side and lowered toward the center direction.
Further, on the bottom surface 24, a medium such as nonwoven fabric and rock wool may be disposed.
In the present invention, the leaf vegetable to be cultivated is merely inserted through the planting hole 23 of the container main body 21. Therefore, unlike the case of soil cultivation, there is a case where the leaf vegetable cannot be fixedly supported. In this case, it is preferred that the leaf vegetable be moderately held so that the grown leaf vegetable does not fall over or slip out. For this purpose, it is preferred that a leaf vegetable cultivation pot 25 be provided so as to hold the leaf vegetable seedling to be inside the container main body 21 through the planting hole 23.

### (Leaf Vegetable Cultivation Pot)

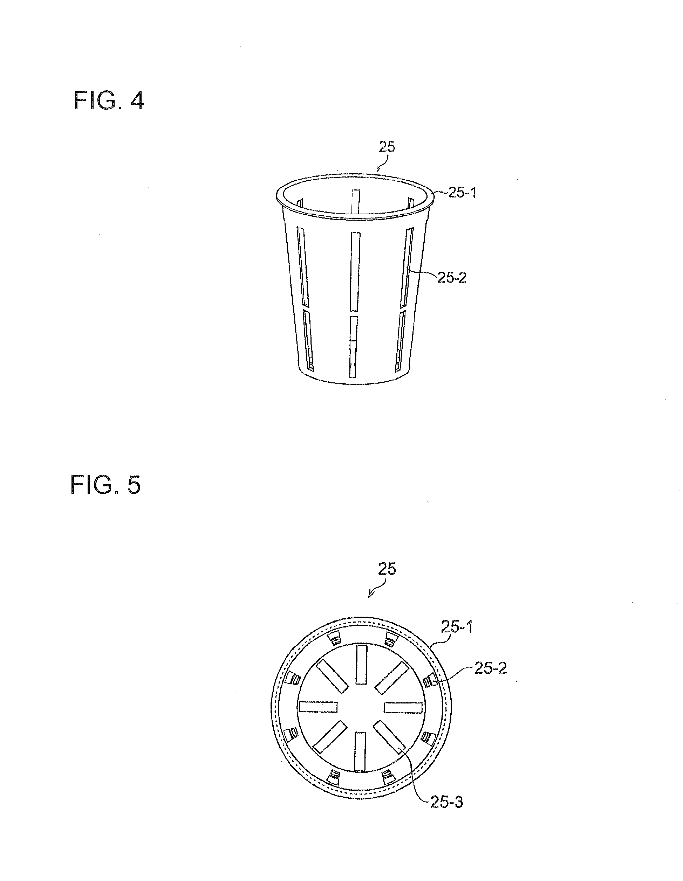

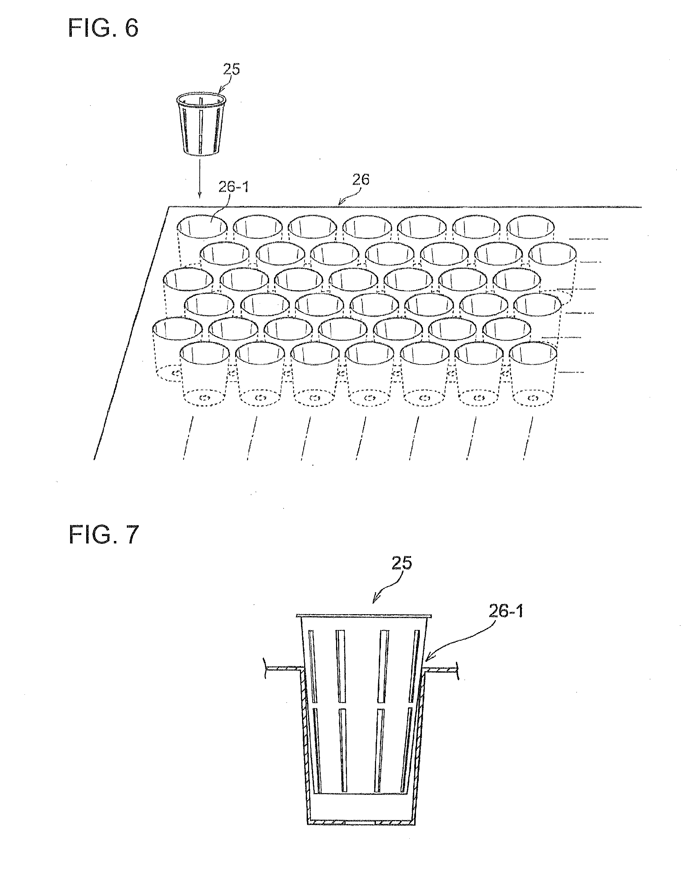

FIG. 4 is a view illustrating an embodiment of the leaf vegetable cultivation pot 25. FIG. 5 is a plan view of the leaf vegetable cultivation pot 25 of FIG. 4. FIG. 6 is a view illustrating how to fit the leaf vegetable cultivation pot 25 in a raising seedling holder 26. FIG. 7 is a schematic cross-sectional view illustrating a state in which the leaf vegetable cultivation pot 25 is inserted in the raising seedling holder 26.
As illustrated in FIGS. 4 and 5, the leaf vegetable cultivation pot 25 is formed of a synthetic-resin container in a substantially truncated cone shape, and includes a flange portion 25-1 provided along the entire circumference in the upper edge thereof so as to be hung on a peripheral edge of the planting hole 23. In this manner, the leaf vegetable cultivation pot 25 is prevented from falling inside the leaf vegetable cultivation container 20, and is stably held.

Generally, when the seedling is directly raised in a concave portion 26-1 of the raising seedling holder 26 as illustrated in FIG. 6, the root grows so thickly that it is impossible to take out and replace the seedling from the raising seedling holder 26 unless the root is cut, which is protruded from the hole opened at the bottom of the raising seedling holder 26. Therefore, in order to easily take out the grown seedling from the raising seedling holder 26 as it is without cutting the root after the seedling is raised, the leaf vegetable cultivation pot 25 is preferred to be used.
In the leaf vegetable cultivation pot 25 of the present invention, there are provided, at a side surface thereof, a few (for example, 4 to 10) side surface notch portions 25-2 (eight elongated clearances in FIG. 5), and at a bottom portion thereof, a few (for example, 4 to 10) bottom portion notch portions 25-3 (eight elongated clearances in FIG. 5).

Further, as illustrated in FIG. 7, the leaf vegetable cultivation pot 25 is structured so that, when the leaf vegetable cultivation pot 25 is installed inside the concave portion 26-1 of the raising seedling holder 26, the vicinity of the bottom portion of the leaf vegetable cultivation pot 25 is not brought into intimate contact with the bottom potion and the side surface of the concave portion 26-1, and a gap is formed therebetween. Therefore, root growth is promoted, and the root can grow to pass through the elongated clearances of the notch portions 25-2 and 25-3 each having a predetermined width. Therefore, the root extension is not disturbed.
Note that, a medium or a water retention material provided in the leaf vegetable cultivation pot 25 is not particularly limited, and there can be used vermiculite, perlite, Ogalite, granular water absorbent resin, rock wool, compressed peat moss or coconut fiber, or the like.

After the seedling is raised to some extent in the leaf vegetable cultivation pot 25, the leaf vegetable cultivation pot 25 can be readily lifted and taken out from the concave portion 26-1 of the raising seedling holder 26.
The leaf vegetable cultivation pot 25 containing the seedling is passed through the planting hole 23 as it is to be housed in the container main body 21. At this time, the flange portion 25-1 of the leaf vegetable cultivation pot 25 is hung on the peripheral edge of the planting hole 23, and hence the leaf vegetable cultivation pot 25 is stably held and is supported so that the root of the seedling is soaked in the nutrient solution 31.
At the time of harvest of the leaf vegetable, only the leaf of the grown leaf vegetable may be torn, the leaf vegetable may be cut from the root thereof, or the leaf vegetable may be taken out together with the leaf vegetable cultivation pot 25.

### (Horizontal Arrangement of Leaf Vegetable Cultivation Containers)

In the present invention, the number of the leaf vegetable cultivation containers 20 to be arranged is not particularly limited. However, the arrangement number thereof influences the supply situation of the nutrient solution with respect to the leaf vegetables housed in the leaf vegetable cultivation containers 20, and hence is preferred to be determined considering the nutrient solution supply capacity or the like. As for domestic cultivation, 1 to 6 rows of the leaf vegetable cultivation containers 20 are preferred to be arranged so as to be substantially parallel to each other in plan view, and 2 to 4 rows thereof are more preferred.
In order to prevent overlapping of leaves during cultivation of the leaf vegetable seedling, the plurality of planting holes 23 provided in the plurality of leaf vegetable cultivation containers 20 may be arranged in a staggered pattern in a projected plane from an upper direction. In this manner, the hydroponic unit 10 can be formed compact, and the leaf vegetable can be effectively grown and cultivated.

### (Step-like Arrangement of Leaf Vegetable Cultivation Containers)

According to another aspect of the present invention, the hydroponic unit can be formed so that the leaf vegetable cultivation containers 20 are arranged in a plurality of rows in a stepped manner and substantially parallel to each other. Also in this case, it is preferred that the plurality of planting holes 23 provided in the plurality of leaf vegetable cultivation containers 20 be arranged in a staggered pattern in a projected plane from an upper direction.
In this aspect, the leaf vegetable cultivation containers 20 are three-dimensionally stacked in a stepped manner, and hence an installation area may be saved with respect to the cultivation amount, and the cultivation amount per installation area may be increased. Further, the number of leaf vegetable cultivation containers 20 to be arranged can be slightly increased to, for example, 4 to 10 rows.
Further, the growth situation of the leaf vegetable cultivated in the leaf vegetable cultivation container 20 can be easily grasped, and visual management of the nutrient solution supply situation can be easily performed. Further, management such as growing and maintenance and operability in leaf vegetable cultivation may be improved.

### (Nutrient Solution)

The nutrient solution tank 30 is a tank for retaining the nutrient solution containing dissolved fertilizer or the nutrient solution with adjusted nutrients or the like. The temperature, the nutrient or oxygen concentration, and the like of the nutrient solution 31 may be adjusted in advance so as to be suitable for the leaf vegetable growth. Therefore, inside the nutrient solution tank 30, there may be provided a measurement sensor for detecting the property of the circulating nutrient solution, such as a water temperature meter, a dissolved oxygen meter, and a pH meter, and further, an oxygen bubble generator, a manual or automatic flow regulating valve for regulating the amount of the circulating nutrient solution, and the like.

The nutrient solution may have the property of, for example, the water temperature of 15 to 20°C, the dissolved oxygen amount of 5 to 10 ppm, and pH of 5.5 to 6.5.
When the nutrient solution is supplied to the uppermost stream of the leaf vegetable cultivation container 20, the nutrient solution is preferred to be sprinkled from a plurality of dispersed places, and is preferred to be sprinkled to both corner portions of the uppermost stream of the leaf vegetable cultivation container 20. The nutrient solutionmaybe circulated and supplied, but the nutrient solution is not required to be always circulated and supplied, and may be separately supplied in a short period of time as necessary.
By installing the hydroponic unit 10 indoors or the like and controlling the water quality by nutrient solution circulation, a fear of damage due to bugs and microorganisms is eliminated, and cultivation may be carried out without the use of pesticides.

### (Desktop Compact Unit)

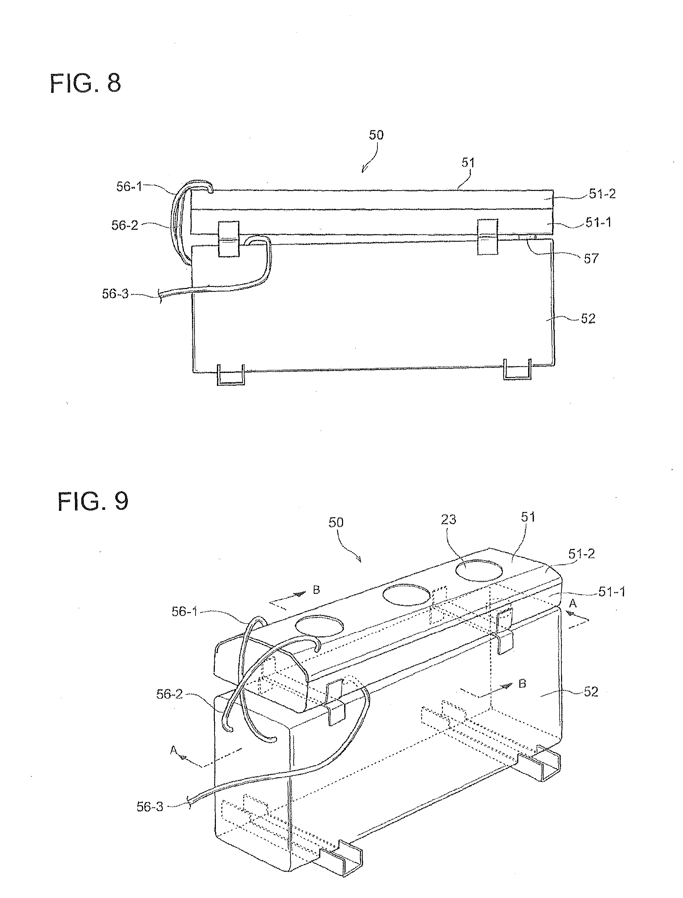

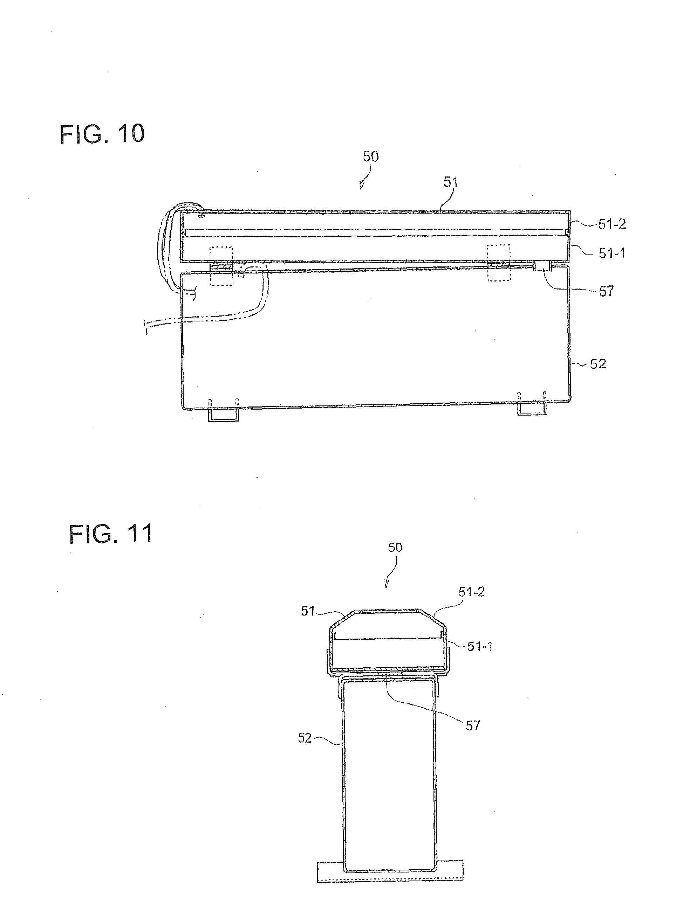

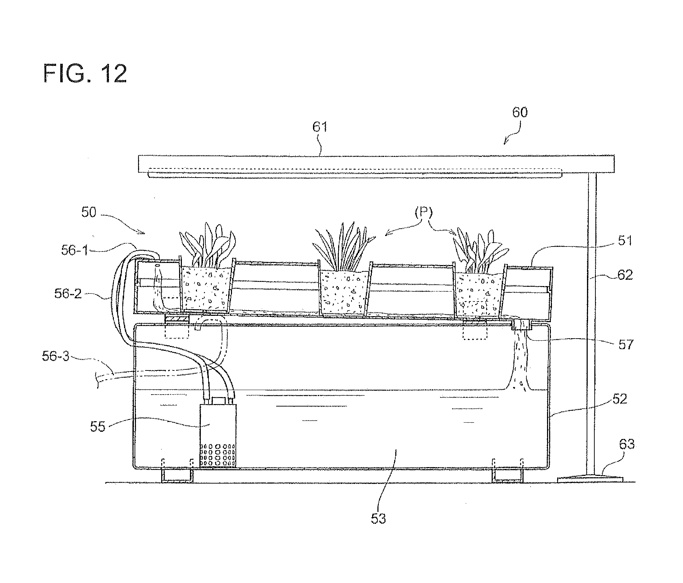

Next, a desktop compact unit for hydroponics which is particularly suitable for domestic use is described with reference to the drawings. FIGS. 8 to 12 are views illustrating an embodiment of a desktop compact unit 50 for hydroponics according to the present invention, in which FIG. 8 is a schematic front view thereof, FIG. 9 is a schematic oblique perspective view thereof, FIG. 10 is a schematic cross-sectional view cut along the line A-A of FIG. 9, FIG. 11 is a schematic cross-sectional view cut along the line B-B of FIG. 9, and FIG. 12 is a schematic vertical cross-sectional view of the desktop compact unit 50 provided with an illumination device 60 to carry out hydroponics.
As illustrated in FIGS. 8 to 12, the desktop compact unit 50 for a leaf vegetable includes a leaf vegetable cultivation container 51, a nutrient solution tank 52, and a nutrient solution circulation supply device 54 for circulating and supplying the nutrient solution 53 to the leaf vegetable cultivation container 51.
The leaf vegetable cultivation container 51 includes a gutter-shaped container main body 51-1 having an inclination in a longitudinal direction, and a lid member 51-2. A plurality of planting holes 23 are provided at adequate intervals at the upper surface of the lid member 51-2. In the compact unit for domestic use, generally, the number of planting holes 23 is preferred to be 3 to 5.

When the leaf vegetable is cultivated, the root of the leaf vegetable seedling is inserted through the planting hole 23 so as to be housed inside the leaf vegetable cultivation container 51. Nutrient solution 53 is supplied from the uppermost stream (left side in FIGS. 8 to 10 and 12) of the leaf vegetable cultivation container 51 to naturally flow down and feed the root of the leaf vegetable with moisture and nutrients. In this manner, the leaf vegetable is grown and cultivated (see FIG. 12).
The nutrient solution 53 retained in a nutrient solution tank 52 is circulated and supplied by the nutrient solution circulation supply device 54. That is, the nutrient solution 53 is supplied to the uppermost stream of the leaf vegetable cultivation container 51 via supply conduits 56-1 and 56-2 by using a nutrient solution supply pump 55, and is sprinkled in the container main body 51-1.
The nutrient solution 53 supplied to the leaf vegetable cultivation container 51 is used to feed the root of the leaf vegetable with moisture and nutrients, and then flows out from the lowermost stream (right side of FIGS. 8 to 10 and 12) of the leaf vegetable cultivation container 51. Then, the nutrient solution 53 returns to the nutrient solution tank 52 via a return conduit 57.
A conduit 56-3 is a conduit for arbitrarily supplying water to the nutrient solution tank 52. Each of the supply conduits 56-1, 56-2, and 56-3 is made of a material with flexibility, such as a synthetic-resin tube.

The leaf vegetable cultivation container 51 is placed on the nutrient solution tank 52, and hence this hydroponic unit is formed compact as a whole and may be placed on a desk. Therefore, the hydroponic unit is particularly suitable for domestic use.
Structures of the container main body 51-1 and the lid member 51-2 of the leaf vegetable cultivation container 51 are basically the same as those of the container main body 21 and the lid member 22 of the leaf vegetable cultivation container 20 described above. However, in view of being a desktop compact unit, the container main body 51-1 is generally formed in a gutter shape having a width of about 8 to 15 cm, a depth of about 5 to 10 cm, and a length of about 30 to 50 cm. Further, a height of the entire desktop unit when the leaf vegetable cultivation container 51 is placed on the nutrient solution tank 52 (see FIG. 11) generally has a width of about 20 to 30 cm.
The structure and material of the concavo-convex groove formed at the bottom surface of the container main body 51-1 are the same as those described above, and the inclination of the bottom surface of the container main body 51-1 is also the same as that described above.
The leaf vegetable cultivation pot 25 used for holding the leaf vegetable seedling to be inside the container main body 51-1 through the planting hole 23 maybe the same leaf vegetable cultivation pot described above, and the nutrient solution to be used is also the same.

### (Illumination Device)

In the present invention, in order to carry out hydroponics more effectively, it is preferred that an illumination device be provided to cultivate the leaf vegetable with illumination. A light source of the illumination device is not particularly limited, and a well-known light source such as a light emitting diode (LED), a semiconductor laser (LD), and a fluorescent lamp may be used.
In a case where the illumination device is used in combination with the above-mentioned desktop compact unit 50, for example, an illumination stand is preferred to be used. Among types of the illumination stand, an illumination stand 60 as illustrated in FIG. 12 is preferred, which includes a base portion 63 at which a control panel (not shown) including a power supply switch, a brightness adjustment knob, and a hue control switch is disposed and to which a support portion 62 of an illumination portion 61 is held upright, and the illumination portion 61 including an illumination case in which the light emitting diodes (LEDs) or the semiconductor lasers (LDs) are arranged.
A structure of the illumination portion 61 of the illumination stand 60 may include, for example, a structure in which the LED or the LD is directly mounted on a lower surface of a substrate with excellent light diffusion performance or the like.

The LED or the LD is preferred because the LED and the LD are small in size, have long life, emit light with a certain wavelength, do not have unnecessary heat radiation, and do not cause a problem such as leaf scorch even at short distance irradiation. Further, by selecting a light emitting element which radiates light at a wavelength effective for growth depending on the type of the leaf vegetable, it is possible to carry out hydroponics at a lower power cost and conserved space compared with a case of a fluorescent lamp. Among types of the light emitting element, the LED is more preferred as a light source of the illumination device.
The LEDs can be used by combining red, blue, and green LEDs while considering the color balance thereof. In particular, it is effective to use a red LED having a wavelength of 610 to 750 nm, preferably 620 to 700 nm, and more preferably 640 to 690 nm, and a blue LED having a wavelength of 420 to 470 nm, which promote photosynthesis of the vegetables. The light frequency can be changed from 1 to 100 Hz, to thereby select and use the optimum frequency for each leaf vegetable.
An separation interval (see FIG. 12) between the leaf vegetable (P) to be cultivated and the illumination portion 61 (light source) of the illumination stand 60 may be arbitrarily adjusted by adjusting the length of the support portion 62 of the illumination stand 60, but the separation interval is generally set to 10 to 30 cm, and preferably set to 15 to 20 cm. With this, the hydroponics can be carried out while circulating and supplying the nutrient solution to the leaf vegetable (P) and irradiating the leaf vegetable (P) with light from the LED or the LD.

In the present invention, the leaf vegetable (seedling) is cultivated by arbitrarily circulating and supplying the nutrient solution 31 or 53 to the leaf vegetable cultivation container 20 or 51 arranged as described above. The bottom surface 24 of the container main body 21 or 51-1 is formed with the concavo-convex groove as described above, and hence the nutrient solution flows down evenly, and the supply amount is stable. Therefore, it is possible to carry out stable cultivation while observing the growth situation of the leaf vegetable (seedling).
The leaf vegetable obtained after finishing the cultivation is harvested by cutting the leaf vegetable out from the leaf vegetable cultivation container 20 or 51. After that, the leaf vegetable (seedling) may be put in again, to thereby repeat the leaf vegetable cultivation. Although it depends on the type of the leaf vegetable, for example, harvest is possible in 1 to 2 months from the start of the cultivation.

### Industrial Applicability

According to the hydroponic method and the hydroponic unit of the present invention, the leaf vegetable may be conveniently cultivated, and hence the present invention can be suitably employed as a hydroponic method and a hydroponic unit for domestic use.

## Claims

1. A hydroponic method for a leaf vegetable, comprising:
supplying nutrient solution to an uppermost stream of a leaf vegetable cultivation container having an inclination in a longitudinal direction;
causing the nutrient solution to flow out from a lowermost stream of the leaf vegetable cultivation container to circulate the nutrient solution,
the leaf vegetable cultivation container having: a plurality of planting holes formed in an upper surface thereof; and a concavo-convex groove formed at a bottom surface thereof in parallel to the longitudinal direction;
inserting the leaf vegetable through corresponding one of the plurality of planting holes to house the leaf vegetable inside the leaf vegetable cultivation container; and
carrying out cultivation while bringing a root of the leaf vegetable into contact with the nutrient solution.

2. The hydroponic method for a leaf vegetable according to claim 1, wherein the supplying nutrient solution is carried out at a plurality of portions at the uppermost stream of the leaf vegetable cultivation container.

3. The hydroponic method for a leaf vegetable according to claim 1 or 2, wherein the leaf vegetable cultivation container comprises a plurality of leaf vegetable cultivation containers which are arranged so as to be substantially parallel to each other in plan view.

4. The hydroponic method for a leaf vegetable according to claim 1 or 2, wherein the leaf vegetable cultivation container comprises a plurality of leaf vegetable cultivation containers which are arranged in a stepped manner and substantially parallel to each other.

5. The hydroponic method for a leaf vegetable according to claim 3 or 4, wherein the plurality of planting holes provided in the plurality of leaf vegetable cultivation containers are arranged in a staggered pattern in a projected plane from an upper direction.

6. The hydroponic method for a leaf vegetable according to any one of claims 1 to 5 , further comprising holding a leaf vegetable cultivation pot by inserting the leaf vegetable cultivation pot through corresponding one of the plurality of planting holes.

7. The hydroponic method for a leaf vegetable according to any one of claims 1 to 6, wherein the carrying out cultivation is carried out with illumination using a light emitting diode or a semiconductor laser.

8. A hydroponic unit for a leaf vegetable, comprising:
a leaf vegetable cultivation container having an inclination in a longitudinal direction;
a nutrient solution tank; and
a nutrient solution circulation supply device for supplying nutrient solution to the leaf vegetable cultivation container, wherein:
the leaf vegetable cultivation container comprises a container main body in a gutter shape and a lid member;
the container main body has a concavo-convex groove formed at a bottom surface thereof inparallel to the longitudinal direction; and
the lid member has a plurality of planting holes formed in an upper surface thereof,
the concavo-convex groove having a depth of 0.01 to 5.0 mm.

9. The hydroponic unit according to claim 8, wherein the leaf vegetable cultivation container is placed on the nutrient solution tank.

10. The hydroponic unit according to claim 8 or 9, further comprising an illumination device using a light emitting diode or a semiconductor laser.

11. The hydroponic unit according to any one of claims 8 to 10 , wherein the leaf vegetable comprises at least one leaf vegetable selected from a group consisting of Boston lettuce, lettuce, Komatsuna, spinach, Japanese honewort, and herbs.
